Europäisches Patentamt

European Patent Office

Office européen des brevets

(11) Veröffentlichungsnummer: **0 078 416**
**A1**

## EUROPÄISCHE PATENTANMELDUNG

(21) Anmeldenummer: **82109359.8**

(22) Anmeldetag: **09.10.82**

(51) Int. Cl.³: **H 02 G 15/18**

(30) Priorität: **15.10.81 DE 3140922**

(43) Veröffentlichungstag der Anmeldung: **11.05.83**
**Patentblatt 83/19**

(84) Benannte Vertragsstaaten: **BE DE FR GB IT NL**

(71) Anmelder: **AEG - TELEFUNKEN Nachrichtentechnik GmbH, Gerberstrasse 33, D-7150 Backnang (DE)**

(72) Erfinder: **Peter, Eugen, Ing. grad., Scheffelstrasse 18, D-7150 Backnang (DE)**
Erfinder: **Klinger, Siegfried, Ing. grad., Heiningerweg 57, D-7150 Backnang (DE)**
Erfinder: **Preissler, Paul, Dipl.-Ing., Scheffelstrasse 16/2, D-7150 Backnang (DE)**

(74) Vertreter: **Schickle, Gerhard, Dipl.-Ing. et al, Licentia Patent-Verwaltungs-GmbH Theodor-Stern-Kai 1, D-6000 Frankfurt/Main 70 (DE)**

(54) **Verschlessvorrichtung für eine Kabelmuffe.**

(57) Die Erfindung betrifft eine Verschließvorrichtung für eine längsverschließbare Kabelmuffe. Ein am Kabelmuffen-mantel angebrachtes fingerartiges Teil greift beim Ver-schließen in ein ebenfalls am Kabelmuffenmantel ange-brachtes U-förmiges Teil rastend ein. Ein Fingerhals endet in einer Rastnase, die nach dem Einrasten formschlüssig mit einer Hinterschneidung an einer Endverdickung eines Schenkels des U-förmigen Teils abschließt.

0078416

Licentia Patent-Verwaltungs-GmbH     Z13 PTL-BK/Spe/kön
Theodor-Stern-Kai 1             BK 80/58
D-6000 Frankfurt 70

## Verschließvorrichtung für eine Kabelmuffe

Die Erfindung betrifft eine Verschließvorrichtung für eine längsgeschnittene und längsverschließbare Kabelmuffe mit einem im Querschnitt im wesentlichen U-förmigen ersten Teil und einem im Querschnitt fingerartigen zweiten Teil, das beim Verschließen in das erste Teil einrastet. Eine solche Verschließvorrichtung ist bekannt (DE-AS 19 47 057, Fig. 14 nebst zugehöriger Beschreibung).

Beim Verschließen von längsgeschnittenen Kabelmuffen ist besonders darauf zu achten, daß die verwendete Verschließvorrichtung ausreichend dicht vor dem Eindringen von Feuchtigkeit ist. Eine durch die DE-AS 19 47 057 bekanntgewordene Verschließvorrichtung erfüllt diese Forderung nach Feuchtigkeitsdichtigkeit nur unzulänglich. Auch besteht dort die Gefahr des selbsttätigen Öffnens der Verschließvorrichtung.

Aus der DE-OS 26 52 014 ist eine Verschließvorrichtung für eine geteilte Hülse aus Kunststoff bekannt, die aus zwei lose ineinandergreifenden Teilen besteht. Der eine Teil weist einen Metallfinger auf, der um ein anderes Teil geformt ist und ein Lösen der beiden Teile verhindert. Durch die Ausbildung des Fingers als kunststoffbeschichtetes Metallteil wird zwar das selbsttätige Öffnen weitgehend verhindert, aber diese Konzeption ist sehr aufwendig und bedingt mehrere Herstellungswerkzeuge und Arbeitsvorgänge. Außerdem ist für viele Anwendungsfälle keine ausreichende Feuchtigkeitsdichtigkeit gegeben.

Aus der US-PS 29 08 744 ist ebenfalls eine Verschließvorrichtung mit einem U-förmigen und einem einrastenden fingerartigen Teil bekannt. Jedoch ist auch dort kein ausreichender Schutz gegen das Eindringen von Feuchtigkeit gegeben.

Aufgabe der Erfindung ist es daher eine Verschließvorrichtung eingangs genannter Art anzugeben, die einen erhöhten Schutz gegen eindringende Feuchtigkeit gewährleistet und ohne zusätzliche Teile oder Beschichtungen ein sicheres Verschliessen der Kabelmuffe über der gesamten Länge des Kabelmuffenkörpers ermöglicht.

Erfindungsgemäß wird diese Aufgabe durch die kennzeichnenden Merkmale des Anspruchs 1 gelöst.

In den Unteransprüchen sind vorteilhafte Ausbildungen sowie eine Anwendungsmöglichkeit der Erfindung beschrieben.

Vorteilhaft kann die Erfindung bei aus thermoplastischem Kunststoff hergestellten Muffenkörpern an geschnittenen und ungeschnittenen Kabeln eingesetzt werden und ohne Zusatzteile und aufwendige Werkzeuge in einfachster Weise sicher und schnell zu einem rohrförmigen Muffenkörper verschlossen werden. Das fingerartige zweite Teil greift beim Verschliessen über der gesamten Länge des Muffenkörpers in das U-förmige erste Teil ein, um daraufhin einzuschnappen und fest zu verrasten.

Anhand der Zeichnungen wird die Erfindung nun näher erläutert.

Dabei zeigt:

Fig. 1 eine Schnittdarstellung des Kabelmuffenmantels mit Verschließvorrichtung

Fig. 2 eine Schnittdarstellung des Kabelmuffenmantels mit Verschließvorrichtung im eingerasteten Zustand und

Fig. 3 eine Schnittdarstellung der Verschließvorrichtung allein.

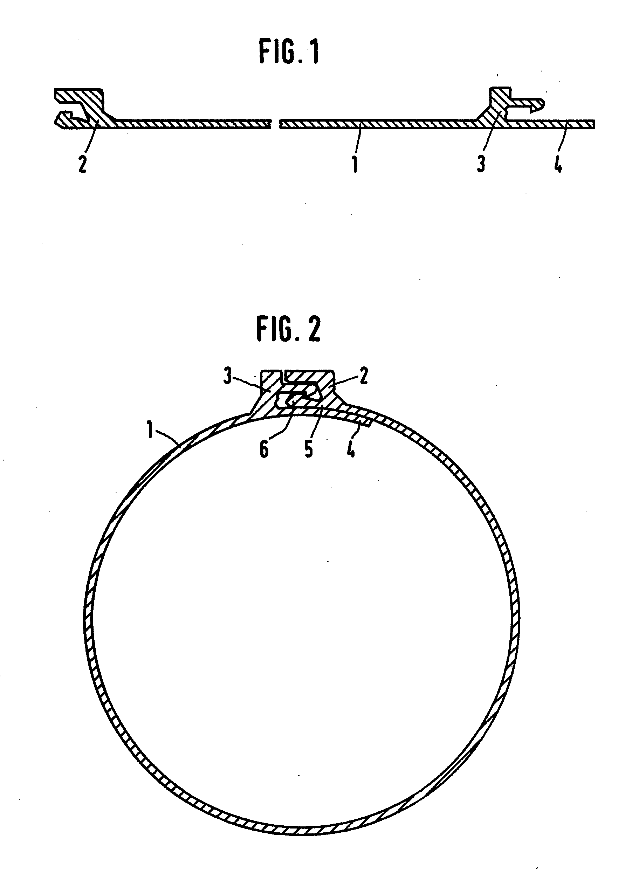

In Fig. 1 ist der ungerollte Kabelmuffenmantel 1 zu sehen. Er endet linksseitig in einem im Querschnitt im wesentlichen U-förmigen ersten Teil 2. Rechtsseitig ist vor dem Ende des Kabelmuffenmantels 1 ein im Querschnitt fingerartiger zweiter Teil 3 angesetzt. Das sich an das fingerartige zweite Teil 3 rechtsseitig anschließende Kabelmantelende 4 dient zur Überlappung 5 wenn der Kabelmuffenmantel 1 zu einem rohrförmigen Gebilde zusammengerollt wird (Fig. 2). Die Innenseite der Längsnaht der Verschließvorrichtung ist überlappend ausgeführt, damit im Bereich der Längsnaht, wo die Gefahr des Eindringens von Feuchtigkeit besteht, eine sichere Abdichtung ermöglicht und ein Ausweichen des am Kabelmuffenmantel 1 anliegenden Schenkels 6 des U-förmigen ersten Teils 2 verhindert wird. Die Gefahr des Ausweichens besteht insbesondere dann, wenn der Kabelmuffenmantel 1 aus warmschrumpffähigem Material besteht, das sich beim Schrumpfvorgang zusammenzieht, wohingegen die nicht schrumpffähige Verschließvorrichtung formbeständig bleibt.

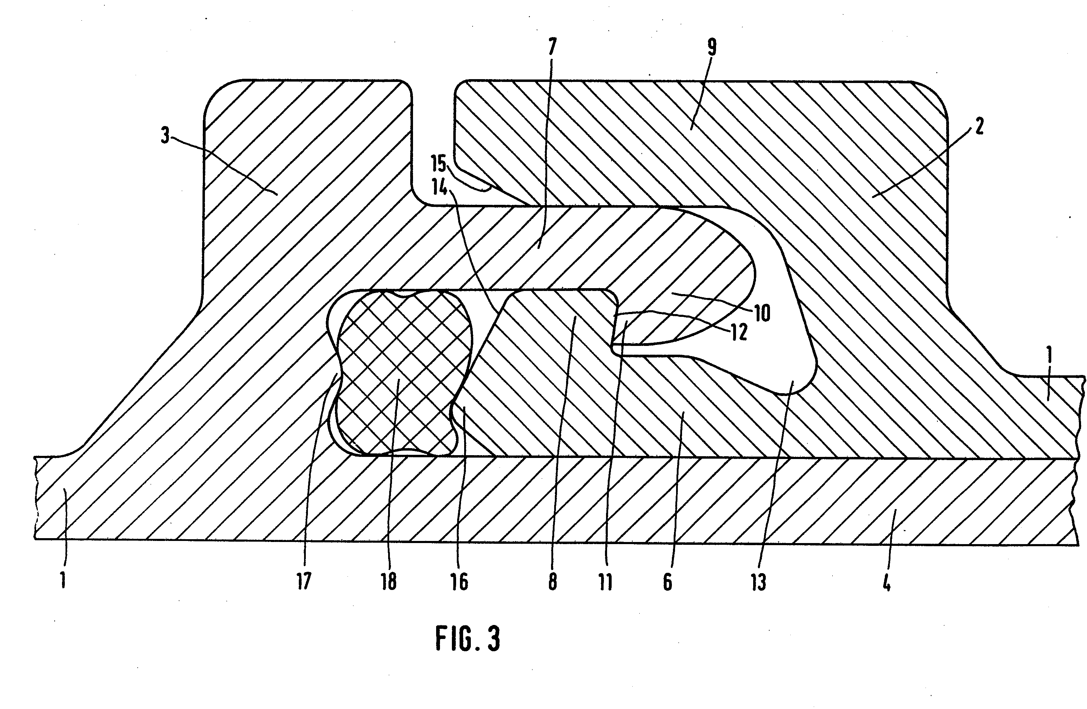

In Fig. 3 ist die Verschließvorrichtung in einer Schnittdarstellung vergrößert dargestellt. Das im Querschnitt fingerartige zweite Teil 3 befindet sich im eingerasteten Zustand, wobei der Fingerhals 7 formschlüssig zwischen der Endverdickung 8 des am Kabelmuffenmantel außen anliegenden Schenkels 6 und der Innenseite des nichtanliegenden äußeren Schenkels 9 geführt ist. Der Fingerhals 7 des zweiten Teils 3 läuft in einem Kragen 10 aus, der bezüglich des Fingerhalses unsymmetrisch angeordnet ist. Der Kragen 10 geht auf der dem nicht anliegenden äußeren Schenkel 9 zugekehrten Seite stetig und einfach gekrümmt in den Fingerhals 7 über. Auf der dem anliegenden Schenkel zugekehrten Seite 6 endet der Kragen 10 in einer Rastnase 11. Die nach hinten ragende Flanke der Endverdickung 8 weist eine Hinterschneidung 12 auf, die mit der Rastnase 11 nach dem federartigen Einrasten des zweiten Teils 3 in das erste Teil 1 formschlüssig mit der Hinterschneidung 12 abschließt.

Zum leichteren Wegdrücken des äußeren Schenkels 9 vom Schenkel 6 beim Einrasten weist der Schenkel 6 einen V-förmigen, den Schenkelhals einschnürenden, Einschnitt 13 auf. Zum leichteren Einführen des fingerartigen zweiten Teils 3 ist die nach außen gerichtete Flanke der Endverdickung 8 sowie das ihr gegenüberliegende Ende des nichtanliegenden äußeren Schenkels 9 abgeschrägt (14, 15). Außerdem weist die nach außen gerichtete Flanke der Endverdickung 8 einen Längssteg 16 auf, der mit einem am Tragkörper des fingerartigen zweiten Teils 3 angebrachten weiteren Längssteg 17 zur Fixierung einer Dichtschnur 18 dient, die die längsseitige Aussparung, (begrenzt durch: Fingerhals 7, äußere Flanke der Endverdickung 8, Kabelmuffenmantelende 4 und Innenseite des zweiten Teils 3, zwischen Fingerhals und Kabelmuffenmantelende), ausfüllt und zur Erhöhung der Dichtigkeit beiträgt.

- - - - -

0078416

- 1 -

Licentia Patent-Verwaltungs-GmbH     Z13 PTL-BK/Spe/kön
Theodor-Stern-Kai 1                  BK 80/58
D-6000 Frankfurt 70


Patentansprüche


1. Verschließvorrichtung für eine längsgeschnittene und längsverschließbare Kabelmuffe mit einem im Querschnitt im wesentlichen U-förmigen ersten Teil und einem im Querschnitt fingerartigen zweiten Teil, das beim Verschließen in das erste Teil einrastet, dadurch gekennzeichnet, daß der am Kabelmuffenmantel außen anliegende Schenkel (6) des ersten Teils eine in Richtung des nicht anliegenden äußeren Schenkels (9) weisende Endverdickung (8) besitzt, daß die in den vom U-förmigen Teil umschlossenen Raum nach hinten ragende Flanke der Endverdickung (8) eine Hinterschneidung (12) aufweist, daß am Schenkelhals des am Kabelmuffenmantel außen anliegenden Schenkels (6) ein den Schenkelhals einschnürender Einschnitt (13) vorhanden ist und daß das fingerartige zweite Teil in einem zum Fingerhals unsymmetrisch angeordneten Kragen (10) ausläuft, der auf der dem nichtanliegenden äußeren Schenkel (9) zugekehrten Seite stetig in den Fingerhals (7) des zweiten Teils übergeht und auf der dem anliegenden Schenkel (6) zugekehrten Seite in einer Rastnase (11) endet, die derart ausgebildet ist, daß sie nach dem Einrasten formschlüssig mit der Hinterschneidung (12) an der nach hinten ragenden Flanke der Endverdickung (8) abschließt.

2. Verschließvorrichtung nach Anspruch 1, dadurch gekennzeichnet, daß die nach außen gerichtete Flanke der Endverdickung (8) sowie das ihr gegenüberliegende Ende des nichtanliegenden äußeren Schenkels (9) zum leichten Einführen des fingerartigen zweiten Teils abgeschrägt (14, 15) ist.

3. Verschließvorrichtung nach Anspruch 1 oder 2, dadurch gekennzeichnet, daß die nach außen gerichtete Flanke der Endverdickung (8) einen Längssteg (16) aufweist, der mit einem am Tragkörper des fingerartigen zweiten Teils angebrachten weiteren Längssteg (17) zur Fixierung einer Dichtschnur (18) dient.

4. Verschließvorrichtung nach einem der Ansprüche 1 bis 3, gekennzeichnet durch die Anwendung bei Kabelmuffen mit wärmeschrumpffähiger Ummantelung.

FIG.1

FIG. 2

0078416

FIG. 3

Europäisches
Patentamt

**EUROPÄISCHER RECHERCHENBERICHT**

0078416

Nummer der Anmeldung

EP 82 10 9359

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 023 418 (EGERTON) <br> * Seite 6, Zeile 5 - Seite 8, Zeile 29; Seite 10, Zeile 9 - Seite 11, Zeile 15; Figuren 1,2,4,5 * | 1,2,4 | H 02 G 15/18 |
| A | US-A-3 846 575 (RELIABLE EL.) <br> * Spalte 4, Zeile 54 - Spalte 5, Zeile 54; Figuren 1,8-13 * | 1 | |
| A | EP-A-0 036 250 (RAYCHEM) <br> * Seite 11, Zeile 1 - Seite 12, Zeile 9; Figuren 1,2 * | 1,4 | |
| A | FR-A-2 325 219 (THOMPSON et GILLEMOT) <br> * Seite 5, Zeilen 2-32; Figur 3 * | 1 | RECHERCHIERTE SACHGEBIETE (Int. Cl. ³) |
| A | EP-A-0 026 435 (SIEMENS) <br> * Seite 9, Zeile 1 - Seite 10, Zeile 3; Figuren 7,8 * | 1,4 | H 02 G 15/00 <br> F 16 L 47/00 <br> B 29 C 25/00 |

Der vorliegende Recherchenbericht wurde für alle Patentansprüche erstellt.

| Recherchenort <br> DEN HAAG | Abschlußdatum der Recherche <br> 31-01-1983 | Prüfer <br> LOMMEL A. |
|---|---|---|